# EUROPEAN PATENT APPLICATION

(11) **EP 1 043 465 A2**
(43) Date of publication of application: **11.10.2000**
(21) Application number: 00107152.1
(22) Date of filing: 10.04.2000
(51) Int. Cl.: E05B 49/00, B60R 25/00

(54) **Remote control system for motor vehicle and building access**

(30) Priority: 09.04.1999 US 289590
(71) Applicant: EATON CORPORATION, Cleveland, Ohio 44114-2584 (US)
(72) Inventor: Simon, Marc Raymond, Whitefish Bay, Wisconsin 53211 (US); Lhomme, Francois, 67202 Wolfisheim (FR); Leligne, Christophe, 67120 Wolxheim (FR); Perino, Didier, 92150 Suresnes (FR)
(74) Representative: Wagner, Karl H., Dipl.-Ing.

(57) **Abstract**

Devices in a motor vehicle (15) and in a building (11) are controlled by a remote control system (10) that includes a first control circuit (14) which responds to a disabling command by deactivating a functional device (17) on the vehicle (15). A second control circuit (70) responds to receipt of a control signal by activating an operational device (81) of the building (11). The second control circuit (70) also responds to receipt of the system disabling signal by inhibiting its further response to the control signal and by transmitting a disabling command to the first control circuit (14). Thus in the event that the vehicle (15) is stolen, the owner can disable both remote control (70,14) of the building's operational device (81) and of the functional device (17) on the vehicle. A wireless protocol for exchanging the signals and commands is provided.

## Description

### Background Of The Invention

The present invention relates to wireless remote systems for controlling access to motor vehicles and to buildings, such as garages. In addition, the present invention relates to vehicle theft deterrent systems.

Automobiles have used keys which mechanically operate locks to limit access to the vehicle and starting the engine to only authorized persons. More recently remote keyless entry (RKE) systems have been provided that use a small radio frequency (RF) transmitter, often having the shape of a key ring fob, to access the vehicle. This RF transmitter has a number of push button switches allowing the driver to control different functions of the vehicle, such as lock and unlock the doors, arm a security system or open the trunk. These transmitters also have been proposed to control starting of the vehicle engine. When a given push button switch is operated, the transmitter sends an RF signal which carries a digital numerical code and a designation of the function to be performed. A receiver in the vehicle receives the transmitter signal, verifies that the numerical code designates an authorized transmitter for that particular vehicle and if so, signals the vehicle control circuits to perform the prescribed function.

For some time garage doors have been raised and lowered by motor driven apparatus which are controlled from a vehicle by a hand-held radio transmitter. That transmitter is programmed to send a digital code to a receiver that is connected to the motor control circuit for the door opener.

When the motor control circuit receives the proper digital code, the motor is activated. If the motor vehicle is stolen, the thief also obtains the radio transmitter for the garage door and thus has access to the owner's residence. Therefore, there exists a need for a secure protocol for exchanging remote access signals and a mechanism for disabling such access in the event the remote control device is stolen.

Bidirectional radio frequency communication is being utilized for some time in cordless telephones. The term "cordless telephone" as used in the telecommunication industry, means a telephone comprising a base station and a hand-held transceiver unit. The base station is connected by wires to a terrestrial telephone line serving the owner's premises. A hand-held transceiver carried by the user communicates by radio frequency signals with the single base station that is up to 300 meters away.

The Digital Enhanced Cordless Telecommunications (DECT) protocol was developed in the mid-1980's as a pan-European standard for cordless telephones and has been adapted for use outside the European Union. The DECT standard protocol has been used for simultaneous bidirectional communication between a base station and a hand-held transceiver of cordless telephones. This standard utilizes ten frequencies for communication. The exchange of signals over each frequency is divided into repetitive message frames, each being ten milliseconds in duration and subdivided into twenty-four time slots. The twelve time slots in the first half of each frame are used for communication from a hand-held transceiver to the associated base station, while the twelve time slots in the second frame half are used for communication from the base station and the hand-held transceiver. The time slots of a given frame may simultaneously carry signals from several different sets of hand-held transceivers and base stations. It should be noted that different regions of the world have implemented the DECT protocol is slightly different manners. For example, in some regions the frequencies and the number of time slots in each message frame may differ.

When a user desires to use activates the cordless telephone to make an outgoing call, the hand-held transceiver searches for a frequency that has a matching time slots in each frame half which are not being used by another cordless telephone system. This is accomplished by the hand-held transceiver listening for digital signals being sent in the time slots of the frame at each allocated frequency. When a vacant pair of time slots is found, the hand-held transceiver sends a message initiation signal on the selected frequency during a time slot in the first half of a message frame.

While the hand-held transceiver is performing these functions, the base station is scanning the ten frequencies and listening during each of the twelve time slots in the first half of the message frames at each frequency. When the base station hears a message initiation signal that is addressed to it, i.e. containing the proper identification data, the base station sends a response to the transceiver in the associated time slot in the second half of a frame at the same frequency and bidirectional communication is established. A reverse procedure occurs when the base station receives an incoming call via the terrestrial telephone line.

### Summary Of The Invention

A general object of the present invention is to remote system for accessing a motor vehicle which also can be employed to remotely control access to a garage for the motor vehicle.

Another object is to provide a mechanism for disabling the access to the garage in the event that the remote system is stolen or lost.

A further object of the present invention is to provide such a remote system with the capability of disabling the motor vehicle in the event that the vehicle is stolen.

Yet another object is to enable such disabling via a telephone or other type of communication system.

These and other objectives are satisfied by a control system which has a first control circuit installed in the vehicle to operate a functional device on the vehicle. A second control circuit installed in the building controls an operational device of that building.

The first control circuit has a first transceiver for wireless communication. The first control circuit responds to a disabling command received via the first transceiver by disabling the functional device. For example, the functional device may be door locks or the ignition system of the vehicle.

The second control circuit responds to receipt of a control signal by activating the operational device. For example, the operational device may a garage door opener or door locks of the building. In the preferred embodiment of the present system, the control signal may come from the first control circuit or from a separate hand-held remote control. The second control circuit also receives a system disabling signal from a user operable device and responds by inhibiting subsequent response to the control signal. Receipt of the system disabling signal also results in the second control circuit transmitting the disabling command to the first control circuit on the vehicle.

Preferably both the first and second transceivers communicate using the Digital Enhanced Cordless Telecommunications protocol.

The present system enables remote control of both the vehicle and the building to be disabled in the event tat the vehicle is stolen. A procedure for carrying out that disablement from a remote location via a common carrier communication network is described.

### Brief Description Of The Drawings

FIGURE 1 is a pictorial diagram of a system according to the present invention for remotely accessing a motor vehicle and a building; and
FIGURE 2 is a block schematic diagram of a driver's remote motor vehicle control system.

### Detailed Description Of The Invention

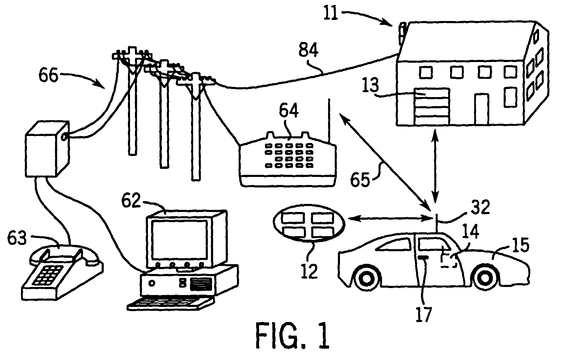

With initial reference to Figure 1, a keyless access system 10 comprises a hand-held remote control 12, a control circuit 14 located in a motor vehicle 15 and similar control circuit to operate equipment in a building, such as a house 11 with a garage door 13.

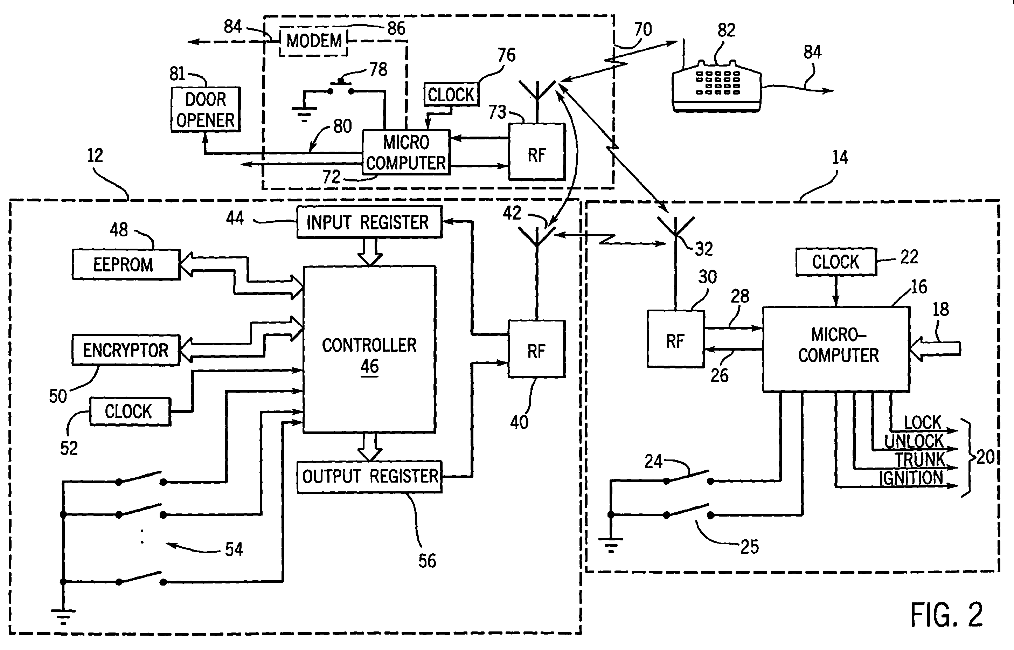

As shown in detail in Figure 2, the vehicle control circuit 14 includes a first microcomputer 16 with internal memory in which a control program and data are stored. A conventional clock circuit 22 supplies timing pulses to the first microcomputer 16. A vehicle driver is able to command the first microcomputer 16 to perform different functions by operating manual input switches 24 or 25, as will be described. A port of the microcomputer 16 may also be provided to connect a programming device, such as a keyboard or portable computer, for configuring the control circuit 22. Alternatively, configuration of the control circuit 22 can be performed by downloading data via the radio frequency link.

The vehicle control circuit 14 activates several functions on the motor vehicle, such as locking and unlocking the doors, unlatching the trunk lid and starting the engine, for example. For that functionality, the first microcomputer 16 is interfaced to the corresponding actuating devices. In some cases, the actuating device is controlled by an another computer in the motor vehicle to which the first microcomputer 16 sends operating commands via a parallel communication bus 18. In other vehicles, first microcomputer 16 has individual output lines 20 connected directly to the actuating devices. For example, separate wires are coupled to actuators of the door lock doors 17, to a trunk lid actuator and to the engine ignition system.

A serial output line 26 and a serial input line 28 of the first microcomputer 16 are connected to a first radio frequency transceiver 30 which utilizes a digital cordless telephone protocol, such as the Digital Enhanced Cordless Telecommunications (DECT) standard. In a general sense, the first radio frequency transceiver 30 modulates a standard radio frequency (RF) carrier with the serial digital data received on line 26 and transmits that modulated radio frequency signal via an antenna 32. The first transceiver 30 also receives and demodulates signals on a second radio frequency that are received by the antenna 32 to recover serial digital data. That data is sent via line 28 to the first microcomputer 16.

The remote control 12, which preferably has the form of a key ring fob carried by a driver, communicates with the control circuit 14. In particular, the first transceiver 30 of the control circuit 14 is designed to exchange signals with a second radio frequency transceiver 40 and antenna 42 within the remote control 12. The second transceiver 40 has a receiver section which demodulates the received radio frequency signal to recover digital data carried by that signal and the recovered data is sent in a serial format to an input register 44. The input register 44 converts the serial data stream from the second transceiver 40 into a parallel format which is read by a controller 46. The controller 46 may be either a hardwired device for sequentially performing the remote control operations to be described, or a programmable device which executes a software program to perform those operations. Controllers of this general type are well-known in different types of transponders and their conventional technology can be utilized to implement the functions of the present controller 46. The controller 46 of the remote control 12 is connected to an electrically erasable programmable read only memory (EEPROM) 48 which stores data to be transmitted to the motor vehicle control circuit 14 when the remote control is interrogated. A clock circuit 52 also provides timing signals for the controller 46.

A plurality of user operable switches 54 are connected to different input lines to the controller 46 in order for the driver to select the specific functions to be performed on the motor vehicle. For example, a separate switch can be provided for the functions of unlocking and locking the doors, unlatching the trunk lid, and starting the engine.

The remote control 12 also includes an encryptor 50 connected to the controller 46 to encrypt a remote control security number for transmission to the control circuit 14. The encryptor 50 utilizes a secret-key cryptography algorithm to encrypt data for sending to the control circuit. For example, the algorithm specifies a sequence of a plurality of logical operations which are performed on a known seed number and a challenge number received from the control circuit to produce a resultant number for transmission by the remote control. Several cryptography algorithms of this type are described by Mehrdad Foroozesh in an article entitled "Protecting Your Data With Cryptography," *UNIX Review*, November 1996, volume 14, number 12, page 55(6), which description is incorporated herein by reference. Such encryption techniques and algorithms are commonly used to encode computer data being transmitted over common carriers. It should be understood that other encryption techniques may be used.

Digital output data is sent by the controller 46 in parallel form to a parallel-in/serial-out output register 56. The serial data from the output register 56 is applied to the input of a transmitter section in the second transceiver 40 which modulates a radio frequency signal which that data. The resultant RF signal is sent via the antenna 42 to the control circuit 14 in motor vehicle. The components of the remote control are powered by a battery (not shown).

When the driver desires the vehicle to perform a given function the corresponding switch 54 on the remote control 12 is pressed. This sends a signal to the controller 46 which responds by obtaining a unique identification number assigned to this particular remote control and stored in the EEPROM 48. The identification number and an indication of the switch 54 that was pressed are sent via output register 56 to the second transceiver 40 from which it is transmitted to the control circuit 14 in the adjacent motor vehicle 15 as seen in Figure 1.

Before a message containing the identification number and switch indication may be sent, the remote control 12 must locate a pair of DECT frame time slots which are not already in use. This process begins by scanning each of the ten DECT frequencies. If the remote control 12 does not hear a message frame on a given frequency, it then forms a new message frame and selects an arbitrary pair of time slots to use. If a particular frequency already is carrying DECT messages, the remote control 12 listens during the message frames for an available pair of frame slots, that is ones which do not already contain message data. If none is found, the next DECT frequency is selected. When available time slots in each half of the message frame are found, the remote control 12 transmits the message in the time slot during the second half of the message frame. The remote control 12 then listens for an acknowledgment in the corresponding time slot during the first half of subsequent frames on the selected frequency.

Receipt of a message frame causes the vehicle control circuit 14, which had been in a "sleep state", to wake-up wherein its microcomputer 16 to begin executing a software routine stored in memory. As noted previously, any of several well known data encryption algorithms may be employed to exchange data between the remote control 12 and the vehicle control circuit 14 for greater security and robustness against interference. Thus the first portion of the communication process may be an exchange of messages according to encryption algorithm which verifies that the remote control is authentic, i.e. authorized to access this motor vehicle 15.

When the remote control 12 has been authenticated, the first microcomputer 16 uses the switch indication received from the remote control 12 to determine the motor vehicle function to activate. For example, when the door unlock function is indicated, an unlock command signal is sent out over either communication bus 18 or one of the dedicated output lines 20 to a lock control circuit of the motor vehicle 15. Other command signals unlatch the vehicle's trunk or start the engine.

Communication with the motor vehicle 15 also may be established by dialing a cordless telephone base station 64 that is in the vicinity of the vehicle. This cordless telephone base station 64 does not necessarily have to be within the house 11. A common carrier telephone network 66 provides the connection between a personal computer 62 and the cordless telephone base station 64. The cordless telephone base station creates an RF communication link 65, using the DECT protocol, with the motor vehicle control circuit 14. The personal computer 62 and the cordless telephone base station 64 act as another remote control device similar to device 12. Specifically the cordless telephone base station 64 acts like the second transceiver 40 in Figure 2, whereas the personal computer 62 functions as the remaining components of the remote control. In particular, the personal computer 62 contains a remote control identification code that the control circuit 14 in the motor vehicle 15 will recognize as being authorized to activate its functions.

When activated, the personal computer 62 formulates a message containing the identification code and an indication of a function for the motor vehicle to perform. That message is sent via the common carrier telephone network 66 to the cordless telephone base station 64 from which it is sent to the vehicle over radio frequency link 75 using the DECT communication protocol, in the same manner as the remote control 12. Upon receipt of this DECT message, the motor vehicle control circuit 14 wakes up and responds as was described previously.

This cordless telephone based communication with the motor vehicle enables technicians at a service facility to enable and activate functions on the vehicle. The personal computer 62 can send a larger number of commands that are available via the hand-held remote control 12. Some of those commands may only be available to the service technicians. In addition, this communication link can be used by personnel at an office of the vehicle's manufacturer to remotely instruct the control circuitry within vehicle 15 to unlock the doors for a motorist who has locked the keys and the remote control inside the vehicle. However, this latter feature is available only if there is a cordless telephone 64 in close proximity to the vehicle.

The remote access system 10 also controls the operation of equipment of the house 11, such as the motor driven opener for garage door 13. To this end, the remote access system includes a building control circuit 70 located inside the house 11 and having a third transceiver 73 to communicate with both of the first and second transceivers 30 and 40. The third transceiver 73 is connected to ports of a second microcomputer 72 which executes a communication and building control program in response to timing signals from a clock 76.

A push button switch 78 is connected to another port of the second microcomputer 72 to enable a occupant of the building to activate the standard motor driven, garage door opener (not shown). Additional switches can be provided to enable other equipment in the house 11 to be operated by the building control circuit 70. The second microcomputer 72 has a plurality of outputs 80 connected to the garage door opener 81 and the other equipment being operated.

In addition to communicating with the first and second transceivers 30 and 40, the third transceiver 73 of the building control circuit 70 is able to exchange messages with a conventional cordless telephone 82 within the house 11. The cordless telephone 82 is connected to a common carrier telephone network 66 by a standard telephone line 84 for the house, thus allowing remote devices such as the personal computer 62 and the push button telephone 63 to communicate with the building control circuit 70 and operate equipment within the house 11, as will be described. As an option, the remote communication with the telephone network 66 can be established via a conventional modem 86 which interfaces with the second microcomputer 72 to the telephone line 84 for the house 11.

When the motor vehicle 15 approaches the house 11, the remote access system 10 also can be employed to operate the motor driven garage door 13, instead of having a separate remote control transmitter for that purpose. At that time, the drive activates switch 24 of the control circuit 14 inside the vehicle 15. This notifies the first microcomputer 16 to send signals to the building control circuit 70 using the DECT communication protocol and a similar process as described for communication from the vehicle remote circuit 12. Because the vehicle control circuit 14 is initiating the communication, it scans the DECT allocated frequencies for an available pair of time slots to use for bidirectional communication. Once unused time slots have been found, the first microcomputer 16 sends the first transceiver 30 a message which contains the identification code for the vehicle control circuit 14 and an indication of the function to be performed, i.e. activate garage door opener. Note that the building control circuit 70 may perform other functions such as unlocking other doors and turning on outside lights.

Upon receiving the initial message from the vehicle, the building control circuit 70 may exchange a series of messages with the vehicle control circuit 14 to determine the authenticity of the communications. Once the authenticity is established, the second microcomputer 72 sends an activation command via one of the output lines 84 to the motor driven garage door 13.

The building control circuit 70 also is able to receive messages from a remote location via the telephone network 66 and either cordless telephone 82 or the optional modem 86. This allows a person to activate equipment in the house, such as turning on lights, by sending a command from a remotely located personal computer 62 or push-button telephone 63. For example if motor vehicle 15 is stolen, these remote input devices can be used to disable the operation of the building control circuit 70 by the vehicle control circuit 14 and the remote controls 12 associated wit the stolen vehicle. Specifically, the building control circuit 70 deletes the identification codes assigned to those remote controls 12 and vehicle control circuit 14 from the list of authorized devices. Thereafter any messages that contain one of those identification codes will be ignored by the building control circuit 70. This prevents the stolen devices from being used to access the house 11.

In addition, commands may be sent from the remote input devices to the building control circuit 70 for relaying to the motor vehicle 15. In the event that the vehicle 15 is stolen for example, the owner can use either a remote personal computer 62 or a remote push button telephone 63 send a command for disabling the vehicle to the building control circuit 70. The building control circuit's microcomputer 72, upon receiving that command, sets deactivation flags in its internal memory locations associated with the identification numbers assigned to the control circuit 14 and the remote controls 12 related to the stolen vehicle. Thereafter the building control circuit 70 no longer will respond to command messages from the devices whose identification numbers are flagged.

In addition, upon receiving a message from a control circuit 14 or remote control 12 with a flagged identification number, the building control circuit 70 transmits a reply which disables operation of that vehicle. That is the building control microcomputer 72 formulates a message that contains a identification number that will be accepted by the control circuit 14 in the stolen vehicle and that contains a disabling command. When that command is received by the vehicle control circuit 14, its first microcomputer 16 responds by ignoring any further signals from any remote controls 12. The first microcomputer 16 also deactivates the engine ignition via an output line 20. As a safeguard to prevent an accident, the deactivation may not take place until the next time the engine is turned off by the operator. In which case, the engine is inhibited from being turned on again. The disabling command may cause the first microcomputer 16 to activate other theft deterrent functions, such as flashing the lights and honking the horn of the vehicle to draw attention to the thief.

## Claims

1. A remote control system (10) for a vehicle (15) and a building (11), wherein the vehicle includes a functional device (17) which is electrically controllable and the building includes an operational device (81) which is electrically controllable, said remote control system comprising:
a first control circuit (14) mounted to the vehicle and connected to the functional device (17), the first control circuit having a first transceiver (30) for wireless communication, wherein the first control circuit responds to a disabling command received by the first transceiver by disabling the functional device;
a user operable device (82,84) for producing a system disabling signal;
a second control circuit (70) connected to the operational device (81) of the building (11) and coupled to the user operable device (82,84), the second control circuit having a second transceiver (73) for wireless communication, wherein the second control circuit (70) responds to the second transceiver (73) receiving a control signal by activating the operational device (81), and wherein the second control circuit responds to the system disabling signal by thereafter not responding to the control signal and by transmitting the disabling command via the second transceiver (73) to the first control circuit (14).

2. The method as recited in claim 1 wherein the first transceiver (30) and the second transceiver (73) communicate using a Digital Enhanced Cordless Telecommunication protocol.

3. The method as recited in claim 1 wherein the user operable device (82,84) comprises a cordless telephone (82) which is connected to a common carrier communication network (84) and which is able to communicate with the second control circuit (73).

4. The method as recited in claim 1 wherein the user operable device (82,84) comprises a common carrier communication network (84) which is coupled to the second control circuit (70).

5. The method as recited in claim 1 further comprising a user input device (24) connected to the first control circuit (14), wherein the first control circuit responds to operation of the user input device by sending a control signal via the first transceiver (30) to the second control circuit (70).

6. The method as recited in claim 1 further comprising a remote controller (12) which wirelessly transmits a first command to the first control circuit (14), and wherein the first control circuit responds to the first command by activating the functional device (17).

7. The method as recited in claim 6 wherein the remote controller (12) wirelessly transmits a second command to the second control circuit (70), and wherein the second control circuit responds to the second command by activating the operational device (81).

8. A method for remotely controlling a functional device (17) of a vehicle (15) and an operational device (81) of a building (11), said method comprising the steps of:
providing a first control circuit (14) mounted to the vehicle (15) and connected to control the functional device (17);
providing a second control circuit (70) connected to control the operational device (81);
sending a control signal to the second control circuit;
the second control circuit (70) responds to receipt of the control signal by activating the operational device (81);
operating a user operable device (82,84) to produce a system disabling signal;
transmitting the system disabling signal to the second control circuit (70); the second control circuit (70) responds to receipt of the system disabling signal by inhibiting response to subsequent receipt of the control signal;
the second control circuit (70) also responds to receipt of the system disabling signal by transmitting a disabling command to the first control circuit (14); and
the first control circuit (14) responds to receipt of the disabling command by disabling the functional device (17).

9. The method as recited in claim 8 wherein sending a control signal to the second control circuit (70) comprises wirelessly transmitting the control signal.

10. The method as recited in claim 8 wherein sending a control signal comprises activating a remote control (12) and wirelessly transmitting the control signal from the remote control.

11. The method as recited in claim 8 wherein sending a control signal utilizes a Digital Enhanced Cordless Telecommunication protocol.

12. The method as recited in claim 8 wherein transmitting the system disabling signal utilizes a Digital Enhanced Cordless Telecommunication protocol.

13. The method as recited in claim 8 wherein transmitting the system disabling signal to the second control circuit (70) comprises transmitting the control signal through a common carrier communication network (84).

14. The method as recited in claim 8 wherein transmitting the system disabling signal to the second control circuit (70) comprises transmitting the control signal through a cordless telephone (82).

15. The method as recited in claim 8 further comprising sending an activation signal from a remote control (12) to the second control circuit (70); and the second control circuit responds to the activation signal by activating the operational device (81).
